# EUROPEAN PATENT SPECIFICATION

(11) **EP 3 229 582 B1**
(45) Date of publication and mention of the grant of the patent: **21.11.2018**
(21) Application number: 15841085.2
(22) Date of filing: 09.12.2015
(51) Int. Cl.: A01G 9/02, A47G 7/00, A47G 7/08

(54) **CONTAINER SYSTEM**
BEHÄLTERSYSTEM
SYSTÈME DE CONTENEURS

(30) Priority: 12.12.2014 NL 2013964
(43) Date of publication of application: 18.10.2017
(73) Proprietor: F.H.J.M. Van Bokhoven Holding B.V., 5735 BE Aarle-Rixtel (NL)
(72) Inventor: VAN BOKHOVEN, Franciscus Johannus Helena Maria, 5735 BE Aarle-Rixtel (NL)
(74) Representative: Jilderda, Anne Ayolt
(86) International application number: PCT/NL2015/050852
(87) International publication number: WO 2016/093696

(56) References cited:
- DE-U1- 8 310 661
- DE-U1- 29 800 878
- FR-A1- 2 641 443
- FR-A1- 2 877 541

## Description

The present invention relates to a container system, comprising a plant holder with a chamber which is accessible on a side remote from a bottom and which is intended and configured to receive therein at least a plant with a root system and a rooting substrate, which plant holder is bounded laterally by at least one outer wall.

Plant holders, usually referred to as flower boxes, are applied both indoors and outdoors for the purpose of receiving therein one or more plants with their root system. The holder comprises for this purpose a hollow space which can be filled with a suitable substrate and which allows periodic feeding and watering of the plant or plants planted therein. The plant holder thus provides an effective and long-term growth environment for the plant(s) received therein. These often remain therein for years or decades, wherein the root system continues to expand and becomes entangled with the growth substrate. It is by no means unlikely that the area around the plant will undergo to greater or lesser extent an aesthetic change during this time. An interior may thus undergo a drastic change, with colours, furniture and interior design being adapted to the times and current fashions. Outdoors similar changes in the design of for instance a garden or other outside space also take place in the course of time. In both cases a need arises to adapt the appearance of the plant holder to such a changed spatial design.

In the case of a conventional flower box this latter entails the plant having to be taken out of the plant holder and transplanted to another plant holder of the desired size, form and colour. Particularly in the case of plant holders of significant dimensions this is laborious and not infrequently creates a considerable soiling of the work location as a result of spilled substrate material. A container system according to the preamble of claim 1 is disclosed by DE8310661U.

The present invention has for its object, among others, to provide a container system with a plant holder which can be aesthetically modified considerably more easily. In a further aspect of the invention it is the object, among others, to create a container system with a plant holder which can be moved more easily.

In order to achieve the stated object a container system according to the invention has the feature that the at least one outer wall is provided on a visible side remote from the chamber with a manually removable wall covering comprising at least one shell part which is connected via coupling means to at least one of the at least one outer wall, which coupling means comprise an axial coupling cavity which extends from a first of each of the at least one outer wall and the shell part in combination with a coupling member which extends from a second of each of the at least one outer wall and the shell part, which coupling member is received for axial movement in the coupling cavity and is placed transversely of a longitudinal axis of the coupling cavity behind a wall of the coupling cavity facing toward the coupling profile.

The invention thus provides a plant holder with an exchangeable outer shell which is constructed from one or more of such shell parts. These shell parts have at least on a visible side thereof facing toward a user an aesthetically different, in particular more appealing appearance than the outer wall covered therewith, and can be removed as desired and replaced by shell parts with a changed colour and/or appearance without the plant having to be taken out of the plant holder or repotted. This saves considerable labour and effort, whereby an aesthetic change to be made to the plant holder becomes relatively low-threshold and is therefore more likely to be carried out. In order to thus enable all-round modification of the plant holder as desired, a particular embodiment of the container system according to the invention has the feature that the coupling cavity extends from each of the at least one outer wall.

A significant advantage of the container system according to the invention is that for a transformation of the plant holder only the wall covering need be replaced. This also creates possibilities and opportunities from a logistic viewpoint. A preferred embodiment of the container system according to the invention has for this purpose the feature that the shell part comprises a substantially flat panel body. Such substantially flat panel bodies can be stored and shipped in relatively compact manner, whereby the container system according to the invention is highly suitable for (re)supply of shell parts by (parcel) post and distance selling such as via internet or mail order. Further use is made of this advantage with a further particular embodiment of the container system according to the invention characterized in that the panel body is covered, in particular stretch-covered, on a visible side thereof with a flexible, in particular textile sleeve. Only the sleeve need thus be replaced to impart a different appearance, such as a pattern, texture and/or colour, to the plant holder. Once it has been acquired, a plant holder can thus be repeatedly given a radically changed appearance in relatively simple and advantageous manner during its lifespan by applying totally different panel bodies or sleeves as wall covering thereon.

A further particular embodiment of the container system according to the invention has the feature that the coupling member comprises an edge part which extends at an acute angle from the shell part and which is received for axial movement in a first part of the coupling cavity, wherein an opposite corresponding coupling member of a further shell part is receivable in an adjacent second part of the coupling cavity. The coupling cavities thus provide not only a basis for connecting the coupling members, but also provide for a fixation and mutual connection of successive shell parts.

In a further preferred embodiment the container system according to the invention is characterized in that the holder is connectable to a further holder via a coupling body which comprises on either side a coupling member which is received close-fittingly in a coupling cavity of respectively the holder or the further holder. Plant holders which may or may not differ in form can thus be mutually coupled making use of the same coupling system as for the shell parts. Diverse plant holders can thus be assembled into a larger entity, and even a covered (patio) garden. A further particular embodiment of the container system according to the invention has the feature here that the shell part extends over the holder and the further holder and is connected via at least one coupling member to each of an outer wall of the holder and an outer wall of the further holder. The relevant shell part thus extending over adjacent plant holders reinforces the suggestion of unity of the whole.

In order to enable vertical as well as lateral variation in the system, a further particular embodiment of the container system according to the invention has the feature that the plant holder comprises on the side remote from the bottom an extension part with at least substantially the same contour as the holder, wherein the coupling means continue into the extension part. Variations in the height of the system can be realized as desired by applying one or more of such extension parts. A usable volume of the plant holder can hereby also be increased.

It is possible to place such an extension part directly onto the plant holder. Because of the corresponding contours of the two parts the parts fit together well here so that a continuous whole is obtained. An alternative embodiment of the container system according to the invention is however characterized in that the at least one outer wall of the holder defines a rectangular contour, wherein close to corner points thereof receiving cavities are provided in which spacers can be received, which spacers maintain the holder and the extension part in a spatially separated relation to each other. The spacers thus place the extension part at a greater height above the plant holder while an intermediate space remains present therebetween, whereby the whole retains an airy character.

If the plant holder is thought to be too deep or too voluminous for a plant to be accommodated therein, a further particular embodiment of the container system according to the invention can advantageously be applied, characterized in that the plant holder comprises on the side remote from the bottom an insert part which is at least partially recessed into the chamber and which comprises an insert bottom which extends at a height above the bottom of the plant holder for the purpose of receiving therein the root system with the rooting substrate. The insert part thus reduces the usable volume and depth of the plant holder so that less substrate need be applied therein. Not only does this save substrate material, it moreover results in a lower total weight of the filled plant holder, whereby it is easier to move.

With a view to a convenient displaceability of a plant holder once it has been filled, a further preferred embodiment of the container system according to the invention is characterized in that the bottom of the plant holder supports in rolling manner on a surface with at least one set of wheels. The plant holder can thus be moved to a different location if desired.

In addition to accommodating one or more plants, the plant holder can also provide space for accessories of varying nature such as are usually desired in an indoor or outdoor living environment. A further particular embodiment of the container system according to the invention has for this purpose the feature that the plant holder provides at least one of a group comprising an electrical or electronic connection, a photovoltaic cell device, a sound reproducing device, a lighting device and a parasol base.

With a view to cost-saving and optional series production, a further preferred embodiment of the container system according to the invention is characterized in that the plant holder and each of the at least one shell part comprise at least substantially an injection-moulded body formed from a weather-resistant, in particular frost-resistant plastic.

The invention will now be further elucidated on the basis of a number of exemplary embodiments and an accompanying drawing. In the drawing:
- Figure 1: is a perspective view of a plant holder of a first exemplary embodiment of a container system according to the invention;
- Figure 2: shows the plant holder of figure 1 with a partial wall covering of a number of exchangeable shell parts;
- Figure 3: shows the plant holder of figure 1 with a full wall covering of a number of exchangeable shell parts in a first embodiment;
- Figure 4: shows the plant holder of figure 1 with a full wall covering of a number of exchangeable shell parts in a second embodiment of a container system according to the invention;
- Figure 5: shows the plant holder of figure 1 with a full wall covering of a number of exchangeable shell parts in a third embodiment of a container system according to the invention;
- Figure 6: shows the plant holder of figure 1 with a full wall covering of a number of exchangeable shell parts in a fourth embodiment of a container system according to the invention;
- Figure 7: shows the plant holder of figure 1 with a further plant holder coupled thereto;
- Fig. 8A-8B: show detail views of the coupled plant holders of figure 7 at successive stages of their mutual connection;
- Figure 9: shows a fifth exemplary embodiment of a container system according to the invention with mutually coupled plant holders;
- Figure 10: shows a sixth exemplary embodiment of a container system according to the invention with mutually coupled plant holders;
- Figure 11: shows a seventh exemplary embodiment of a container system according to the invention;
- Figure 12: shows an eighth exemplary embodiment of a container system according to the invention;
- Figure 13: is a perspective view of a shell part of a wall covering; and
- Figure 14: is a perspective view of a possible further embodiment of the plant holder in the container system according to the invention.

It is noted that the drawings are purely schematic and not drawn to scale. Some dimensions in particular may be exaggerated to greater or lesser extent for the sake of clarity. Corresponding parts are designated in the figures with the same reference numeral.

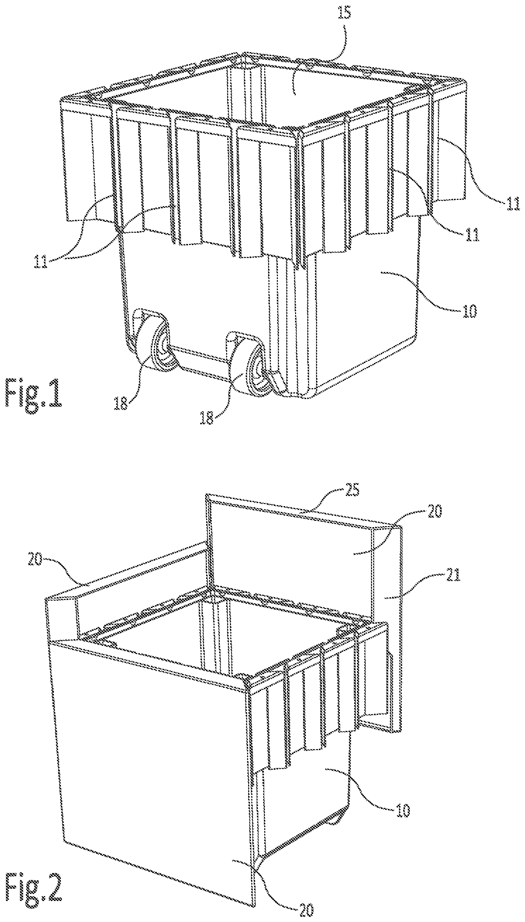

An exemplary embodiment of a container system according to the invention is based on a plant holder 10 as shown in figure 1. The plant holder comprises a hollow body which is open on an upper side and which in this case has been obtained in one whole by injection moulding of a suitable plastic such as polyester, polypropylene, polystyrene or polyethylene. A body cavity 15 forms a chamber here in which a rooting substrate, such as for instance soil, mineral (clay) granules, mineral wool or a hydroculture, can be received so as to enable planting of one or more plants with their root system therein. Typical dimensions of the shown plant holder are a length and width in the order of 50 centimetres and a height in the order of 60 centimetres. Individual or all dimensions of the plant holder can however be made larger or smaller as desired within the scope of the invention.

At the stated dimensions chamber 15 has a net volume of about 150 litres, whereby a holder filled with soil and a sizeable plant will weigh in the order of many tens to several hundreds of kilograms. In order to nevertheless enable easy displacement of the filled holder, the holder is given a rolling form by means of a set of wheels 18. The holder can be raised on an opposite side and subsequently moved. The holder can for this purpose be tilted over wheels 18, for instance by placing a rod in the holder and exerting an increased tilting moment therewith. It is also possible to lift the holder a little on the opposite side with a lever member suitable for the purpose so that a bottom of the holder moves clear of a ground surface and the holder can then be moved by means of the set of wheels 18. In practice this can therefore all be done independently by a single person.

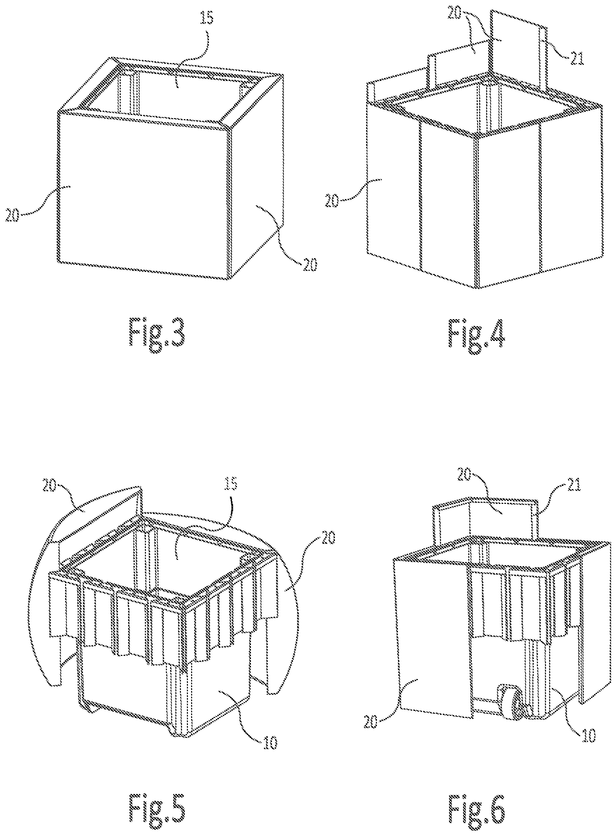

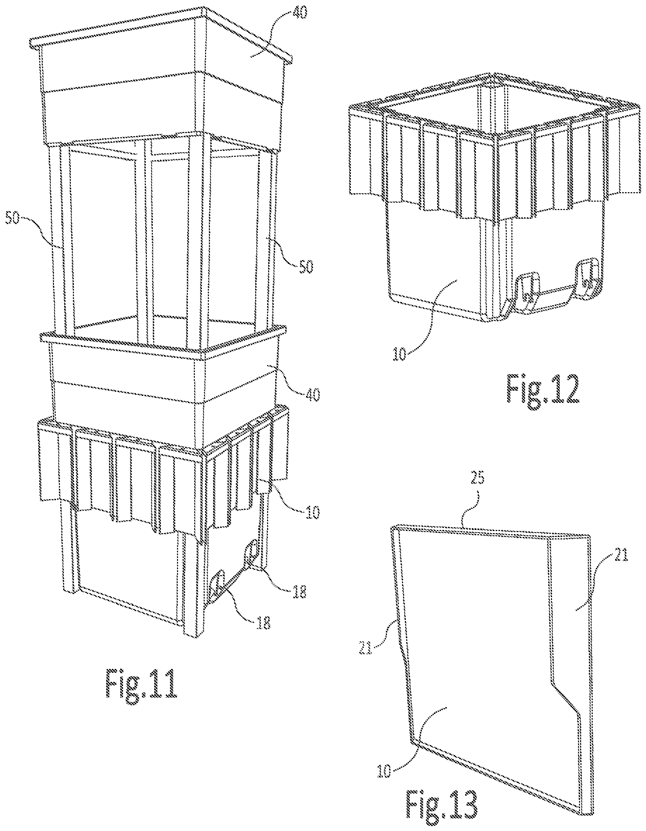

The plant holder of the container system according to the invention can be provided with an exchangeable wall covering, see also figure 2. The wall covering shown in figure 2 comprises a number of separate shell parts 20 which can be coupled releasably to the walls of the plant holder via connecting means. In this example the connecting means comprise on the one hand a number of axial cavities 11 provided in height direction on the walls of the plant holder, in combination with coupling members 21 which extend from shell parts 20 and which slide fittingly in the cavities. Shell parts 20 comprise in this example substantially flat panel bodies, see also figure 13, with an edge part 21 on both sides which protrudes obliquely inward at an acute angle and hooks behind a wall of the associated receiving cavity 11 when the panel body is pushed into the cavity. Each panel body 10 comprises on an upper side a flat upper edge 25 which here conceals plant holder 10 from view. Plant holder 10 can thus be wholly encased in a wall covering, see figure 3, which can later be easily removed and exchanged for another. For shell parts 10 use is likewise advantageously made of a body which is formed integrally from a suitable plastic and/or other material. In addition to the plastics already mentioned above, it is possible here to envisage a metal, wood, stone, glass or any other material which imparts a more decorative appearance to the flower box, optionally on a different surface as base element for the coupling to the plant holder.

Instead of shell parts spanning a whole side of plant holder 10, shell parts can also be applied which span only a part of a side, see figure 4. For this purpose the sides of the plant holder comprise between the corner points one or more further coupling cavities 11 for receiving the edge parts of part-panels 20 therein. Using panels 20 of relatively modest dimensions walls with considerably greater wall lengths can nevertheless be thus fully covered.

Instead of applying flat panel bodies, diverse spatial bodies such as convex parts, see figure 5, or corner parts, see figure 6, can also be applied as exchangeable wall covering. The shape of the plant holder can thus also be changed from flat to spherical. In all shown embodiments use is made of the same coupling system of edge parts 21 and coupling cavities 11 so that the shown shell parts 20 can also be applied in mixed combinations.

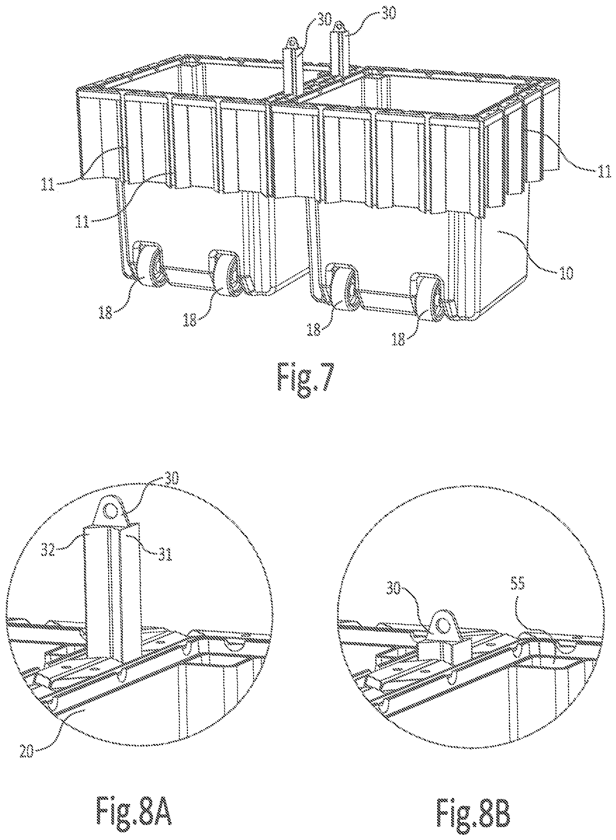

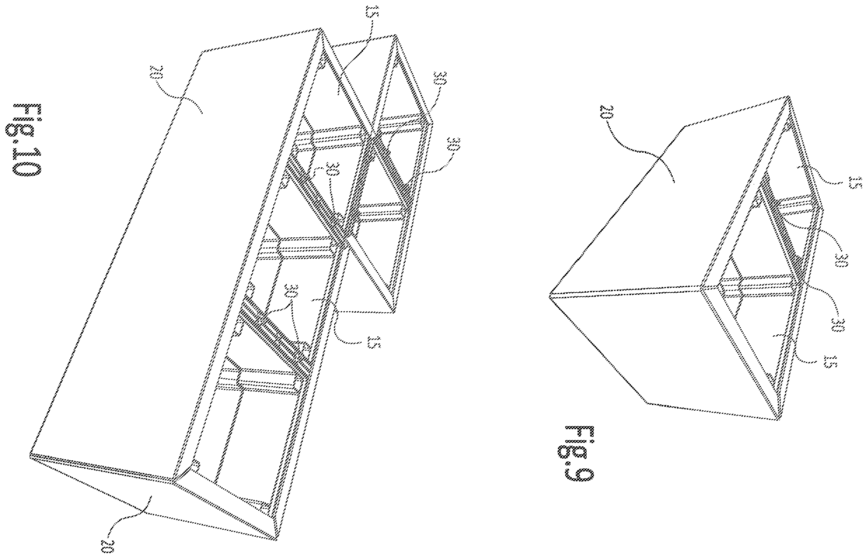

Shown in figure 7 is a container system according to the invention wherein separate plant holders are mutually coupled to form an integral unit. Coupling bodies 30 are for this purpose inserted into coupling cavities 11, see also figure 8A and 8B. Coupling bodies 30 comprise on either side a wedge-shaped coupling member 31,32 which slides close-fittingly into a coupling cavity 11 on the wall of the plant holder. The applied wedge shape of the coupling members forces the adjacent walls of the individual plant holders toward each other so that an exceptionally strong, clearance-free assembly is obtained which can be covered as such, see figure 9 and figure 10, with panel bodies which extend over one or more plant holders so that the whole acquires even more the appearance of a unit. The panel parts are here also coupled releasably to the walls of the plant holders, and so are exchangeable and replaceable at any time to enable simple modification of the appearance of the whole as desired.

As well as variations in width direction, the container system according to the invention also provides for variations in vertical direction. An example hereof is shown in figure 11. The plant holder 10 shown in figure 1 here also forms the basis of the system. Here however the system also comprises an extension part 40 with the same contour as a contour of plant holder 10 which can be placed directly onto the plant holder. Recesses 55 in the corners of the plant holder, see also figures 7, 8A and 8B, form receiving cavities in which can be received coupling bodies (not shown) which continue into the extension part in order to fix the extension part onto the plant holder. In these same receiving cavities 55 can also be placed spacers 50 with which the same or another extension part 40 is supported at a height above the plant holder as shown in figure 12. In addition, the system provides an insert part 60, see figure 12, which can be placed in a plant holder 10 or extension part 40 in order to reduce a net volume and plant depth thereof. The invention thus provides a container system which a user can vary to their heart's content and tailor to his or her personal preferences, wherein the wall covering can later be removed very quickly to make way for a wall covering with a different appearance, a different texture, a different pattern, a different material or a combination thereof so that the whole can be modified to a changing fashion trend.

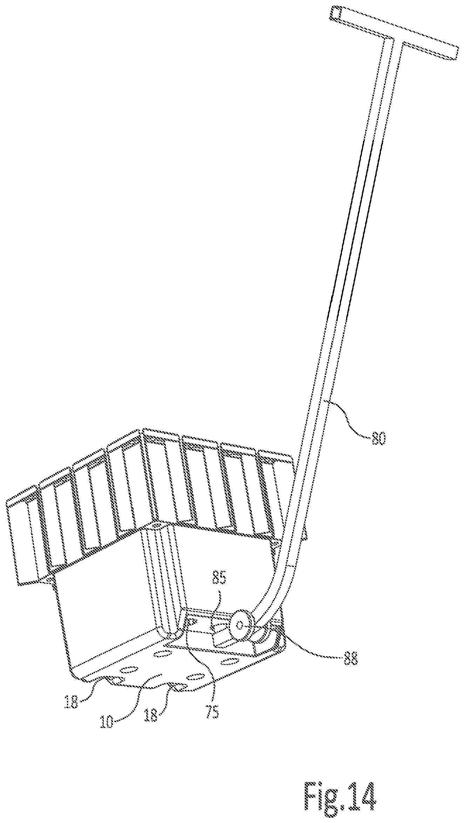

The plant holder can otherwise be provided on a first longitudinal side with adjustable feet 70, see figure 14, with which holder 10 supports on a ground surface and can be set horizontally relative to an opposite longitudinal side resting on the ground surface with the set of wheels 18. Provided for this purpose in the bottom are cavities 75, see figure 14, for mounting such adjusting feet 70.

Provision can also be made in the bottom for further auxiliary means, such as an insertion cavity 85 in particular, see figure 14, on said first longitudinal side in which an outer end of a lever 80 can be received with a rolling wheel 88 at the position of a tilting point thereof. The plant holder is thus easily movable, even in the case of a considerable net volume and mass of the filled holder.

Although the invention has been further elucidated and described above with reference to only several exemplary embodiments, it will be apparent that the invention is by no means limited thereto. On the contrary, many variations and embodiments are still possible within the scope of the claimed invention for the person with ordinary skill in the art.

## Claims

1. Container system, comprising a plant holder (10) with a chamber (15) which is accessible on a side remote from a bottom and which is intended and configured to receive therein at least a plant with a root system and a rooting substrate, which plant holder is bounded laterally by at least one outer wall, wherein the at least one outer wall is provided on a visible side remote from the chamber with a manually removable wall covering comprising at least one shell part (20) which is connected via coupling means (11,21) to at least one of the at least one outer wall, **characterised in that** the coupling means (11,21) comprise an axial coupling cavity (11) which extends from a first of each of the at least one outer wall and the shell part in combination with a coupling member (21) which extends from a second of each of the at least one outer wall and the shell part, which coupling member (21) is received for axial movement in the coupling cavity (11) and is placed transversely of a longitudinal axis of the coupling cavity (11) behind a wall of the coupling cavity (11) facing toward the coupling profile.

2. Container system as claimed in claim 1, **characterized in that** the coupling cavity (11) extends from each of the at least one outer wall.

3. Container system as claimed in claim 1 or 2, **characterized in that** the shell part (20) comprises a substantially flat panel body.

4. Container system as claimed in claim 3, **characterized in that** the panel body is covered, in particular stretch-covered, on a visible side thereof with a flexible, in particular textile sleeve.

5. Container system as claimed in one or more of the foregoing claims, **characterized in that** the coupling member comprises an edge part (21) which extends at an acute angle from the shell part (20) and which is received for axial movement in a first part of the coupling cavity (11), wherein an opposite corresponding coupling member of a further shell part is receivable in an adjacent second part of the coupling cavity (11).

6. Container system as claimed in one or more of the foregoing claims, **characterized in that** the holder is connectable to a further holder via a coupling body (30) which comprises on either side a coupling member (31) which is received close-fittingly in a coupling cavity (11) of respectively the holder or the further holder (10).

7. Container system as claimed in claim 6, **characterized in that** the shell part (20) extends over the holder (10) and the further holder (10) and is connected via at least one coupling member (21) to each of an outer wall of the holder and an outer wall of the further holder.

8. Container system as claimed in one or more of the foregoing claims, **characterized in that** the plant holder comprises on the side remote from the bottom an extension part (40) with at least substantially the same contour as the holder, wherein the coupling means continue into the extension part.

9. Container system as claimed in claim 8, **characterized in that** the at least one outer wall of the holder defines a rectangular contour, wherein close to corner points thereof receiving cavities are provided in which spacers (50) can be received, which spacers maintain the holder (10) and the extension part (40) in a spatially separated relation to each other.

10. Container system as claimed in one or more of the foregoing claims, **characterized in that** the plant holder comprises on the side remote from the bottom an insert part which is at least partially recessed into the chamber and which comprises an insert bottom which extends at a height above the bottom of the plant holder for the purpose of receiving therein the root system with the rooting substrate.

11. Container system as claimed in one or more of the foregoing claims, **characterized in that** the bottom of the plant holder supports in rolling manner on a surface with at least one set of wheels (18).

12. Container system as claimed in one or more of the foregoing claims, **characterized in that** the plant holder provides at least one of a group comprising an electrical or electronic connection, a photovoltaic cell device, a sound reproducing device, a lighting device and a parasol base.

13. Container system as claimed in one or more of the foregoing claims, **characterized in that** the plant holder and each of the at least one shell part comprise at least substantially an injection-moulded body formed from a weather-resistant, in particular frost-resistant plastic.

## Patentansprüche

1. Behältersystem, umfassend einen Pflanzenhalter (10) mit einer Kammer (15), die auf einer Seite von einem Boden entfernt zugänglich ist und die dazu dient und derart gestaltet ist, dass sie wenigstens eine Pflanze mit einem Wurzelsystem und einem Wurzelsubstrat aufnimmt; der Pflanzenhalter ist seitlich an wenigstens eine Wand angebunden, wobei die wenigstens eine Wand auf einer Sichtseite, von der Kammer entfernt, mit einer manuell entfernbaren Wand vorgesehen ist, die wenigstens eine Schale (20) umfasst, die über eine Kupplung (11, 21) an wenigstens eine der wenigstens einen Außenwand angeschlossen ist, **dadurch gekennzeichnet, dass** die Kupplung (11, 21) eine axiale Kupplungsaussparung (11) umfasst, die sich von einer ersten der wenigstens einen Außenwand und dem Schalenteil in Kombination mit einem Kupplungselement (21) erstreckt, das sich von einer zweiten der wenigstens einen Außenwand und dem Schalenteil erstreckt, und dass das Kupplungselement zwecks Axialbewegung in der Kupplungsaussparung (11) aufgenommen ist und quer zur Längsachse der Kupplungsaussparung (11) hinter einer Wand der Kupplungsaussparung (11) angeordnet ist, dem Kupplungsprofil zugewandt.

2. Behältersystem nach Anspruch 1, **dadurch gekennzeichnet, dass** sich die Kupplungsaussparung (11) von jeder der wenigstens einen Außenwand aus erstreckt.

3. Behältersystem nach Anspruch 1 oder 2, **dadurch gekennzeichnet, dass** das Schalenteil (20) einen im Wesentlichen flachen Tafelkörper umfasst.

4. Behältersystem nach Anspruch 3, **dadurch gekennzeichnet, dass** der Tafelkörper auf einer seiner Seiten insbesondere mit einem flexiblen Spannprodukt bedeckt ist.

5. Behältersystem nach einem der vorausgegangenen Ansprüche, **dadurch gekennzeichnet, dass** das Kupplungselement ein Kantenteil (21) umfasst, das sich unter einem spitzen Winkel vom Schalenteil (20) aus erstreckt und zwecks axialer Bewegung in einem ersten Teil der Kupplungsaussparung (11) aufgenommen ist, wobei ein entgegengesetztes entsprechendes Kupplungsteil eines weiteren Schalenteils aufgenommen ist in einem benachbarten zweiten Teil der Kupplungsaussparung (11).

6. Behältersystem nach einem der vorausgegangenen Ansprüche, **dadurch gekennzeichnet, dass** der Halter an einen weiteren Halter über einen Kupplungskörper (30) anschließbar ist, der auf beiden Seiten ein Kupplungselement (31) umfasst, das mit einem Passsitz in einer Kupplungsaussparung (11) sitzt beziehungsweise der Halter oder der weitere Halter (10).

7. Behältersystem nach Anspruch 6, **dadurch gekennzeichnet, dass** sich das Schalenteil (20) über den Halter (10) und den weiteren Halter (10) erstreckt und angeschlossen ist über das wenigstens eine Kupplungselement (21) an eine Außenwand des Halters und einer Halterwand des weiteren Halters.

8. Behältersystem gemäß einem der vorausgegangenen Ansprüche, **dadurch gekennzeichnet, dass** der Pflanzenhalter auf einer vom Boden fernen Seite einen Fortsatz (40) aufweist, mit einer Kontur, die wenigstens annähernd jener des Halters entspricht, und dass sich das Kupplungselement in den Fortsatz hinein erstreckt.

9. Behältersystem nach Anspruch 8, **dadurch gekennzeichnet, dass** die wenigstens eine Außenwand des Halters eine rechtwinklige Kontur aufweist, und dass nahe der Eckbereiche aufnehmende Aussparungen vorgesehen sind, die die Abstandshalter (50) aufnehmen, die ihrerseits den Halter (10) und den Fortsatz (40) getrennt voneinander halten.

10. Behältersystem nach einem der vorausgegangenen Ansprüche, **dadurch gekennzeichnet, dass** der Pflanzenhalter auf der bodenfernen Seite einen Einsatz umfasst, der wenigstens teilweise in die Kammer hinein ausgespart ist und einen Bodeneinsatz umfasst, der sich in einer Höhe oberhalb des Bodens des Pflanzenhalters erstreckt, um das Wurzelsystem mit dem Wurzelsubstrat aufzunehmen,

11. Behältersystem nach einem oder mehreren der vorausgegangenen Ansprüche, **dadurch gekennzeichnet, dass** der Boden des Pflanzenhalters rollend eine Fläche mit wenigstens einem Satz Rädern (18) aufweist.

12. Behältersystem nach einem oder mehreren der vorausgegangenen Ansprüche, **dadurch gekennzeichnet, dass** der Pflanzenhalter wenigstens eine Gruppe aufweist, umfassend einen elektrischen oder elektronischen Anschluss, eine Photovoltaik-Zellen-Einheit, eine schallwiedergebende Einheit, eine Beleuchtungseinheit und eine Parasolbasis.

13. Behältersystem nach einem oder mehreren der vorausgegangenen Ansprüche, **dadurch gekennzeichnet, dass** der Pflanzenhalter sowie jedes der wenigstens einen Schalenteile einen Spritzgusskörper umfasst, der wetterbeständig ist, insbesondere aus frostbeständigem Plastik.

## Revendications

1. Conteneur, comprenant un bac de plantation (10) doté d'un caisson (15) qui est accessible sur un côté opposé à une base et qui est prévu et configuré pour recevoir au moins une plante avec un système racinaire et un substrat d'enracinement, ledit bac de plantation étant fermé latéralement par au moins une paroi extérieure, dans lequel ladite paroi extérieure est dotée sur un côté visible éloigné du caisson d'un habillage amovible manuellement comprenant au moins une enveloppe (20) qui est reliée via des raccords (11, 21) à au moins une des parois extérieures, **caractérisé en ce que** les raccords (11, 21) comprennent une cavité de raccordement axiale (11) qui s'étend depuis une première paroi extérieure et l'enveloppe en association avec un élément de raccordement (21) qui s'étend depuis une deuxième paroi extérieure et l'enveloppe, ledit élément de raccordement (21) étant reçu à des fins de déplacement axial dans la cavité de raccordement (11) et étant placé transversalement par rapport à un axe longitudinal de la cavité de raccordement (11) derrière une paroi de la cavité de raccordement (11) faisant face au profil de raccordement.

2. Conteneur selon la revendication 1, **caractérisé en ce que** la cavité de raccordement (11) s'étend depuis chacune des parois extérieures.

3. Conteneur selon la revendication 1 ou 2, **caractérisé en ce que** l'enveloppe (20) comprend un panneau substantiellement plat.

4. Conteneur selon la revendication 3, **caractérisé en ce que** le panneau est recouvert, en particulier de manière tendue, sur un côté visible d'un manchon flexible, en particulier en textile.

5. Conteneur selon une ou plus des revendications précédentes, **caractérisé en ce que** le raccord comprend une arête (21) qui s'étend selon un angle aigu depuis l'enveloppe (20) et qui est reçu à des fins de déplacement axial dans une première partie de la cavité de raccordement (11), dans lequel un élément de raccordement opposé correspondant d'une autre enveloppe peut être reçu dans une seconde partie adjacente de la cavité de raccordement (11).

6. Conteneur selon une ou plusieurs des revendications précédentes, **caractérisé en ce que** le bac peut être raccordé à un autre bac via un dispositif de raccordement (30) qui comprend de part et d'autre un élément de raccordement (31) qui est reçu de manière ajustée dans une cavité de raccordement (11) respectivement du bac ou du bac supplémentaire (10).

7. Conteneur selon la revendication 6, **caractérisé en ce que** l'enveloppe (20) s'étend par-dessus le bac (10) et le bac supplémentaire (10) et est reliée via au moins un élément de raccordement (21) à une paroi extérieure du bac et à une paroi extérieure du bac supplémentaire.

8. Conteneur selon une ou plusieurs des revendications précédentes, **caractérisé en ce que** le bac de plantation comprend sur le côté opposé à la base une rallonge (40) avec au moins substantiellement le même contour que le bac, les raccords se prolongeant dans la rallonge.

9. Conteneur selon la revendication 8, **caractérisé en ce que** la paroi extérieure du bac définit un contour rectangulaire, qui est doté à proximité de ses angles de cavités de réception pouvant recevoir des entretoises (50), lesdites entretoises maintenant le bac (10) et la rallonge (40) à distance l'un de l'autre.

10. Conteneur selon une ou plusieurs des revendications précédentes, **caractérisé en ce que** le bac de plantation comprend sur le côté opposé à la base une pièce insérée qui est au moins partiellement encastrée dans le caisson et qui comprend une base insérée qui s'étend à une certaine hauteur au-dessus de la base du bac de plantation aux fins de recevoir le système racinaire avec le substrat d'enracinement.

11. Conteneur selon une ou plusieurs des revendications précédentes, **caractérisé en ce que** la base du bac de plantation repose sur une surface de manière à rouler avec au moins un ensemble de roues (18).

12. Conteneur selon une ou plusieurs des revendications précédentes, **caractérisé en ce que** le bac de plantation offre au moins un dispositif parmi un groupe comprenant une connexion électrique ou électronique, un dispositif à cellule photovoltaïque, un dispositif de reproduction du son, un dispositif d'éclairage et un pied de parasol.

13. Conteneur selon une ou plusieurs des revendications précédentes, **caractérisé en ce que** le bac de plantation et chacune des enveloppes comprend au moins substantiellement un corps moulé par injection constitué d'un plastique résistant aux intempéries, en particulier au gel.
